# EUROPÄISCHE PATENTSCHRIFT

(11) **EP 3 059 126 B1**
(45) Veröffentlichungstag und Bekanntmachung des Hinweises auf die Patenterteilung: **20.09.2017**
(21) Anmeldenummer: 16154182.6
(22) Anmeldetag: 04.02.2016
(51) Int. Cl.: B60R 11/04

(54) **ANORDNUNG FÜR EIN FAHRZEUG**
CAMERA ASSEMBLY FOR A VEHICLE
DISPOSITIF DE CAMERA POUR UN VEHICULE

(30) Priorität: 19.02.2015 DE 102015102386; 25.02.2015 DE 102015102726
(43) Veröffentlichungstag der Anmeldung: 24.08.2016
(73) Patentinhaber: Huf Hülsbeck & Fürst GmbH & Co. KG, 42551 Velbert (DE)
(72) Erfinder: Schütz, Heiko, 42549 Velbert (DE)
(74) Vertreter: Zenz Patentanwälte Partnerschaft mbB

(56) Entgegenhaltungen:
- WO-A1-2011/086132
- DE-A1-102006 039 192
- DE-A1-102008 010 966
- DE-A1-102011 111 854

## Beschreibung

Die Erfindung richtet sich auf eine Anordnung für eine Heckklappe eines Fahrzeugs, mit einem Trägergehäuse, das in einem Durchbruch einer Außenverkleidung des Fahrzeugs anzuordnen ist, einer Antriebseinheit, die an dem Trägergehäuse angebracht ist, einer bewegbar gelagerten Kameraeinheit, die an dem Trägergehäuse aufgenommen und mit der Antriebseinheit gekoppelt ist, um wenigstens zwischen einer Ruhestellung und einer aktiven Stellung, bei der ein Umgebungsbereich des Fahrzeugs erfassbar ist, bewegt zu werden, einem an dem Trägergehäuse gelagerten Betätigungselement, welches zwischen einer die Kameraeinheit abdeckenden Ruheposition und einer geöffneten Position bewegbar ausgebildet ist und welches zum Entriegeln und/oder Öffnen der Heckklappe geeignet ist, einem mechanischen Rückstellelement, welches mit dem Betätigungselement gekoppelt ist, und einem Stützelement, welches mit dem mechanischen Rückstellelement gekoppelt ist, wobei in Ruhestellung der Kameraeinheit das mechanische Rückstellelement eine das Betätigungselement in Ruheposition haltende oder drängende Rückstellkraft auf das Betätigungselement ausübt und sich an dem Stützelement abstützt.

Diese Anordnung hat eine doppelte Funktion, denn sie dient zum einen zum Öffnen einer Tür oder Klappe des Fahrzeugs, wozu das Betätigungselement vorgesehen ist, welches an dem Trägergehäuse gelagert ist. Zum anderen dient die Anordnung dazu, den Umgebungsbereich vom Fahrzeug bildlich zu erfassen, was zum Beispiel für ein sicheres Rückwärtseinparken unerlässlich ist. Denn die Rückspiegel liefern dem Fahrzeugführer hierbei nur einen unzureichenden Beobachtungsbereich, da die Rückspiegel keinen Blick in sogenannte tote Winkel ermöglichen. Durch eine Kameraeinheit werden Bilder auch von Bereichen, die von dem Fahrzeugführer nicht mit den Rückspiegeln einsehbar sind, auf einem im Fahrzeuginnenraum angeordneten Bildschirm angezeigt, so dass der Fahrzeugführer einen nahezu vollständigen Überblick über den Umgebungsbereich hat, in den sich das Fahrzeug beim Rückwärtseinparken bewegen soll.

Derartige Anordnungen umfassen ein Trägergehäuse, in dem die Kameraeinheit zwischen einer zurückgezogenen Ruhestellung und einer aktiven Stellung beweglich aufgenommen ist. Beispielsweise kommen wie vorstehend angesprochen derartige Kameraeinheiten im Bereich des assistierten Einparkens von Fahrzeugen zum Einsatz. Wird zum Beispiel der Rückwärtsgang des Fahrzeugs eingelegt, verfährt die Kameraeinheit aus der Ruhestellung in die aktive Stellung. Dadurch wird der Umgebungsbereich hinter dem Fahrzeug durch die Kameraeinheit bildlich erfasst und auf einem Display für den Fahrer angezeigt. Ist die Rückwärtsfahrt beendet und nimmt der Fahrer des Fahrzeugs den Rückwärtsgang wieder heraus, kann die Kameraeinheit von der aktiven Stellung wieder zurück in die Ruhestellung bewegt werden.

Eine Anordnung nach dem Oberbegriff von Anspruch 1 ist aus der DE 10 2006 039 192 A1 bekannt und umfasst ein zum Öffnen einer Tür oder Klappe dienendes Betätigungselement und eine Kameraeinheit, die zur Bilderfassung des Außenbereiches eines Fahrzeugs dient. Das Betätigungselement ist bei dieser Anordnung mit einem mechanischen Rückstellelement gekoppelt. Das Rückstellelement prägt dem Betätigungselement eine Rückstellkraft auf, wodurch das Betätigungselement in seine Ruhestellung gehalten oder gedrängt wird. Mit Hilfe des Rückstellelements bewegt sich das Betätigungselement folglich selbsttätig wieder in seine Ruheposition, in welcher es die Kameraeinheit abdeckt. Neben dem Effekt der selbsttätigen Rückstellung wird durch die Rückstellkraft des Rückstellelements ein unerwünschtes Klappern des Betätigungselements während der Fahrt vermieden. Bei diesem bekannten Stand der Technik gelangt das Betätigungselement mit Hilfe der Kameraeinheit oder der Antriebseinheit aus seiner Ruheposition in seine Betätigungsposition, indem bei der Bewegung der Kameraeinheit aus der Ruheposition in die aktive Position gleichzeitig das Betätigungselement verstellt wird. Die Antriebseinheit muss also in der Lage sein, eine größere Kraft als die Rückstellkraft aufzubringen, um das Betätigungselement aus seiner Ruheposition bewegen zu können. Dabei ist zu beachten, dass aufgrund der Funktion des zum Öffnen dienenden Betätigungselements die Rückstellkraft nicht nur so bemessen sein muss, dass Klappergeräusche vermieden werden. Vielmehr ist es aus sicherheitstechnischen Aspekten erforderlich, die Rückstellkraft so hoch zu wählen, dass das Betätigungselement auch bei hohen Fliehkräften, wie sie zum Beispiel im Fall eines Fahrzeugunfalls vorherrschen können, in der Ruheposition gehalten ist und nicht ungewollt in die geöffnete Position gelangt, in welche es eine Tür oder Klappe des Fahrzeugs entriegeln oder sogar öffnen kann. Gegen diese hohe Rückstellkraft muss die Antriebseinheit arbeiten, so dass für eine solche Anordnung eine große und leistungsstarke Antriebseinheit erforderlich ist. Dies bringt jedoch den Nachteil mit sich, dass eine solche Antriebseinheit relativ viel Bauraum benötigt und darüber hinaus viel Energie verbraucht, um die Kameraeinheit aus ihrer Ruhestellung gegen die Rückstellkraft, die auf das Betätigungselement wirkt, in die aktive Stellung zu bewegen.

Der Erfindung liegt die Aufgabe zugrunde eine Lösung zu schaffen, die auf konstruktiv einfache Weise eine Anordnung für ein Fahrzeug bereitstellt, die kostengünstig in ihrer Herstellung ist und bei der die vorstehend genannten Nachteile beseitigt sind. Insbesondere soll eine Anordnung bereitgestellt werden, welche sich durch einen geringen Bauraum auszeichnet und welche mit wenig Energie bzw. welche energieeffizient betrieben werden kann.

Bei einer Anordnung der Eingangs bezeichneten Art wird die Aufgabe erfindungsgemäß dadurch gelöst, dass das Stützelement relativ zum Trägergehäuse bewegbar ist und dass die Antriebseinheit mit dem Stützelement gekoppelt ist.

Im Sinne der Erfindung ist unter dem Begriff "gekoppelt" oder "Kopplung" eine Wirkverbindung zu verstehen, durch die zum Beispiel die Antriebseinheit direkt oder indirekt über ein anderes Bauteil eine Bewegung des Stützelements bewirkt, wobei die Wirkverbindung mechanischer oder elektrischer Art sein kann.

Vorteilhafte und zweckmäßige Ausgestaltungen und Weiterbildungen der Erfindung ergeben sich aus den Unteransprüchen.

Durch die Erfindung wird eine Anordnung einer Heckklappe eines Fahrzeugs zur Verfügung gestellt, die sich durch eine funktionsgerechte Konstruktion auszeichnet. Eine derartige Anordnung für ein Fahrzeug mit einer bewegbar gelagerten Kameraeinheit und einem Betätigungselement zum Öffnen und/oder Entriegeln einer Tür oder Klappe des Fahrzeugs ist einfach und kostengünstig ausgebildet und gewährleistet in der Ruhestellung des Betätigungselements einen sicheren Schutz der Kameraeinheit vor äußeren Einflüssen, wie zum Beispiel Schmutz, Stößen oder Schlägen, wobei auch ein unbeabsichtigtes Öffnen des Betätigungselements infolge von Fliehkräften, die im Falle eines Fahrzeugunfalls auf das Betätigungselement einwirken, wirksam durch die Erfindung verhindert wird. Die erfindungsgemäße Anordnung hat eine Doppelfunktion, nämlich die Erfassung der Fahrzeugumgebung und das Öffnen und/oder Entriegeln einer Klappe oder Tür des Fahrzeugs, weshalb die Anordnung alternativ auch als Erfassungsbetätigungsanordnung oder als Kameraeinheit mit integriertem Betätigungselement oder als Betätigungs- oder Griffanordnung mit integrierter Kameraeinheit bezeichnet werden kann. Dadurch, dass die Antriebseinheit mit dem Stützelement gekoppelt ist und dass das Stützelement relativ zu dem Trägergehäuse bewegbar ausgebildet ist, wird das Stützelement verlagert, wenn die Antriebseinheit die Kameraeinheit aus der Ruhestellung in die aktive Stellung bewegt. Aufgrund dieser Verlagerung des Stützelements relativ zum Trägergehäuse verlagert sich auch die Position des Stützelements zu dem am Trägergehäuse gelagerten Betätigungselements, was letztlich dazu führt, dass sich die Wirkung der Rückstellkraft des Rückstellelements ändert, weil sich die Abstützung des Rückstellelements infolge der Verlagerung des Stützelements verändert. Aus dem Stand der Technik ist es bekannt, dass sich das Rückstellelement an dem Trägergehäuse abstützt. Im Unterschied zum Stand der Technik ist aber gerade diese Abstützung, die durch das Stützelement gegeben ist, ortsveränderlich, denn das Stützelement kann seine Position relativ zu dem Trägergehäuse und in Abhängigkeit der Stellung der Kameraeinheit oder des Betriebsmodus der Antriebseinheit ändern. Erfindungsgemäß bewirkt eine Positionsänderung des Stützelements bei der Bewegung der Kameraeinheit aus der Ruhestellung in die aktive Stellung, dass sich gleichzeitig auch das Betätigungselement in seine geöffnete Position bewegen kann, ohne dass diese Bewegung entgegen der Rückstellkraft ausgeführt werden muss. Denn dadurch, dass das Stützelement in der aktiven Stellung der Kameraeinheit in einer anderen Stellung als in der Ruhestellung der Kameraeinheit angeordnet ist, ändert sich auch die Abstützung des Rückstellelements, was letztlich dazu führt, dass das Betätigungselement bei einer Bewegung der Kameraeinheit aus der Ruhestellung in die aktive Stellung von der Antriebseinheit kraftlos mitbewegt wird und entsprechend ohne wesentlichen zusätzlichen Kraftaufwand aus seiner Ruheposition in seine geöffnete Position bewegt wird. Kraftlos bedeutet in diesem Zusammenhang, dass bei der vorstehenden Bewegung des Betätigungselements die Rückstellkraft nicht überwunden werden muss. Die Antriebseinheit muss folglich nur die Kraft aufwenden, die zur Verstellung der Kameraeinheit und des Stützelements erforderlich ist. Die Rückstellkraft muss nur dann überwunden werden, wenn die Kameraeinheit in ihrer Ruhestellung angeordnet ist und das Betätigungselement zum Entriegeln und/oder Öffnen der Heckklappe von einem Benutzer betätigt wird.

In Ausgestaltung der Anordnung sieht die Erfindung vor, dass in Ruhestellung der Kameraeinheit das Betätigungselement entgegen der vom Rückstellelement aufgebrachten Rückstellkraft in die geöffnete Position bewegbar ist, die zum Entriegeln und/oder Öffnen der Heckklappe geeignet ist. Dies hat den Vorteil, dass sich das Betätigungselement selbsttätig in die Ruhestellung zurückbewegt, wenn die manuelle Betätigung des Betätigungselements abgeschlossen ist. Für die Rückstellung ist folglich keine zusätzliche oder größer dimensionierte Antriebseinheit erforderlich, so dass weder Bauraum noch zusätzliche Energie für einen Zusatzantrieb aufgebracht werden müssen.

Zur Veränderung der Wirksamkeit der Rückstellkraft des Rückstellelements sieht die Erfindung in Ausgestaltung vor, dass das Stützelement zwischen einer Grundstellung, in welcher die Kameraeinheit in Ruhestellung angeordnet ist, und einer Betriebsstellung, in welcher die Kameraeinheit in der aktiven Stellung angeordnet ist, bewegbar ausgebildet ist. Die Kopplung der verschiedenen Stellungen des Stützelements an die beiden Kamerastellungen hat den Vorteil, dass darüber das Stützelement mit der Antriebseinheit gekoppelt ist. Mit Hilfe der Antriebseinheit, mit welchem das Stützelement gekoppelt ist, ist es möglich, dass das Stützelement relativ zum Trägergehäuse bewegbar ist. Folglich kann eine mittels der Antriebseinheit bewirkte Bewegung der Kameraeinheit mit einer Bewegung des Stützelements verbunden sein, wobei eine Änderung der Anordnung des Stützelements in Bezug auf das Trägergehäuse zu einer Änderung der relativen Anordnung des Stützelements zu dem Betätigungselement führt, was wiederum bewirkt, dass sich die Wirksamkeit der Rückstellkraft ändert. Die Rückstellkraft, durch welche das Betätigungselement in die Ruheposition gedrängt wird, ist nur wirksam, wenn das Stützelement in der Ruhestellung angeordnet ist.

Eine konstruktiv besonders günstige Möglichkeit zur Realisierung einer wirksamen Rückstellkraft ist in weiterer Ausgestaltung der Erfindung dadurch gegeben, dass das mechanische Rückstellelement ein elastisches Federelement umfasst. Das elastische Federelement ist bei Betätigung des Betätigungselements komprimiert, wodurch die Rückstellkraft wirksam ist, welche an dem Betätigungselement angreift und dieses in die Ruhestellung drängt.

Wenn die Kameraeinheit nicht in der aktiven Stellung angeordnet ist und das unbetätigte Betätigungselement in der Ruheposition die Kameraeinheit abdeckt, ist gemäß einer weiteren Ausgestaltung der Erfindung vorgesehen, dass in Grundstellung des Stützelements und in Ruheposition des Betätigungselements das Federelement entspannt ist oder unter einer das Betätigungselement in seiner Ruheposition haltenden Vorspannung steht. Das Federelement wird dann, wenn es entspannt ist, zum Beispiel nicht auf Biegung beansprucht, wenn das Betätigungselement in Ruheposition und die Kameraeinheit in Ruhestellung angeordnet sind, wobei aber auch andere Arten der Beanspruchung des Federelements möglich sind. Alternativ kann das Federelement auch unter einer Vorspannung stehen, wodurch verhindert wird, dass das Betätigungselement sich während seiner Positionierung in der Ruhestellung bewegen und Klappergeräusche erzeugen kann.

In weiterer Ausgestaltung der erfindungsgemäßen Anordnung ist vorgesehen, dass in Ruhestellung der Kameraeinheit das Stützelement derart in der Grundstellung gehalten ist, dass in geöffneter Position des Betätigungselements das Federelement infolge einer relativen Verlagerung des Betätigungselements zu dem Stützelement elastisch komprimiert ist. Das Federelement wird demnach bei Betätigung des Betätigungselements zum Entriegeln und/oder Öffnen einer Tür oder Heckklappe zusammengedrückt, indem eine der Rückstellkraft des Federelements entgegenwirkende Kraft, die insbesondere größer als die Rückstellkraft ist, aufgebracht wird.

Zur Minimierung des notwendigen Bauraumes ist es in weiterer Ausgestaltung der Erfindung von Vorteil, wenn das Stützelement schwenkbar an dem Trägergehäuse gelagert ist, wobei das Stützelement von einer Haltekraft, die größer als die Rückstellkraft des elastischen Federelements ist, in der Grundstellung gehalten ist. Eine Haltekraft, die größer als die Rückstellkraft ist, ist erforderlich, damit das Stützelement bei Betätigung des Betätigungselements weiterhin seine Abstützwirkung besitzt und nicht durch das Rückstellelement aus seiner Grundstellung gedrängt wird. Die notwendige Haltekraft kann dabei beispielsweise die Antriebseinheit aufbringen, die als eine Art Motorbremse wirken kann, wenn die Kameraeinheit in ihrer Ruhestellung angeordnet ist und nicht bewegt werden muss.

Ebenso platzsparend wirkt sich die Maßnahme aus, dass das Stützelement um eine an dem Trägergehäuse gelagerte Achse schwenkbar ist, wobei das Stützelement ferner einen ersten Hebelarm aufweist, an dem eine Anlagefläche für das elastische Federelement und ein mit einer an dem Betätigungselement ausgebildeten Bewegungsbahn zusammenwirkender Bewegungszapfen ausgebildet sind. Wenn das Stützelement in Grundstellung angeordnet ist, stellt es eine Abstützfläche bereit, an der sich das Rückstellelement abstützt, welches vom Betätigungselement bei dessen Betätigung durch einen Benutzer gegen das Stützelement gedrückt wird. Wenn sich andererseits das Stützelement aus der Grundstellung in die Betriebsstellung bewegt, dann zieht der Bewegungszapfen des Stützelements das Betätigungselement in dessen geöffnete Position, ohne dass dabei das Federelement zusammengedrückt wird oder gegen die Rückstellkraft bearbeitet werden müsste, denn die Anlagefläche für das Rückstellelement bewegt sich mit dem Stützelement.

Von Vorteil für eine sicher geführte Bewegung ist es, wenn das elastische Federelement den Bewegungszapfen in die Bewegungsbahn drängt. Eine Bewegung des Betätigungselements oder des Stützelements erfolgt somit kontrolliert.

Zur Änderung der Stellung des Stützelements sieht die Erfindung in Ausgestaltung vor, dass der erste Hebelarm des Stützelements oder ein zweiter Hebelarm des Stützelements mit der Antriebseinheit bewegungsgekoppelt ist, wobei das Stützelement vorzugsweise über die Kameraeinheit mit der Antriebseinheit bewegungsgekoppelt ist. Somit ist nur eine einzige Antriebseinheit erforderlich, um sowohl die Kamera zu bewegen als auch das Betätigungselement zu verschwenken. Weil das Verschwenken des Betätigungselements aus der Ruheposition in die geöffnete Position weitgehend kraftlos erfolgt bzw. weil nicht gegen die Rückstellkraft des Rückstellelements gearbeitet werden muss, kann eine Antriebseinheit mit geringer Antriebsleistung verwendet werden, die sowohl kostengünstig ist als auch wenig Einbauraum beansprucht.

Die Erfindung sieht in weiterer Ausgestaltung vor, dass das Betätigungselement um eine an dem Trägergehäuse gelagerte Schwenkachse zwischen der Ruheposition und der geöffneten Position schwenkbar ist, wobei bei einer Bewegung in die Betriebsstellung der Bewegungszapfen derart an einem Endpunkt oder einer Endfläche der Bewegungsbahn des Stützelements anliegt, dass der Bewegungszapfen des Stützelements bei einer Bewegung des Stützelements aus der Grundstellung in die Betriebsstellung das Betätigungselement in seine geöffnete Position zieht. Dieses Mitziehen wird im Sinne der Erfindung auch als kraftlose Mitnahme bezeichnet, da die Antriebseinheit keine spürbare Zusatzkraft aufbringen muss, um das Betätigungselement in die geöffnete Position zu verschwenken, denn es muss aufgrund der Stellungsänderung des Stützelements erfindungsgemäß nicht gegen die Rückstellkraft des Rückstellelements gearbeitet werden. Dabei ist zu beachten, dass trotz kraftloser Mitnahme das Federelement den Bewegungszapfen immer in die Bewegungsbahn drückt.

Damit die Anordnung möglichst platzsparend am Fahrzeug eingebaut werden kann, ist es von weiterem Vorteil, wenn die Schwenkachse gleichzeitig auch die das Stützelement lagernde Achse ist. Auf diese Weise kann der Einbauraum für eine weitere Achse eingespart werden.

Die Mitnahme des Betätigungselements mit Hilfe des Stützelements erfolgt - wie vorstehend angemerkt - weitestgehend kraftlos. Zu diesem Zweck sieht die Erfindung in Ausgestaltung vor, dass sich bei einer Bewegung der Kameraeinheit aus der Ruhestellung in die aktive Stellung die relative Anordnung bzw. Positionierung von Anlagefläche des ersten Hebelarms zu dem Betätigungselement nicht ändert, so dass das Federelement sowohl während der Bewegung der Kameraeinheit aus der Ruhestellung in die aktive Stellung als auch in der Betriebsstellung des Stützelements und in der geöffneten Position des Betätigungselements entspannt ist oder unter einer die relative Positionierung von Anlagefläche zu Betätigungselement haltenden Vorspannung steht.

Schließlich sieht die Erfindung in Weiterbildung vor, dass der zweite Hebelarm als ein Klappenelement ausgebildet ist, welches in der Grundstellung des Stützelements die Kameraeinheit abdeckt und welches in der Betriebsstellung des Stützelements derart um die Schwenkachse verschwenkt angeordnet ist, dass die Kameraeinheit in die aktive Stellung bewegbar ist, um einen Umgebungsbereich des Fahrzeugs zu erfassen. Zwar deckt das Betätigungselement die Kameraeinheit dann ab, wenn es unbetätigt und in seiner Ruheposition angeordnet ist. Jedoch besteht bei Betätigung die Gefahr, dass bei aufgeschwenktem Betätigungselement Schmutz und dergleichen an die Kameraeinheit gelangen und diese verschmutzen können, so dass die Kameraeinheit nicht ihren Zweck der bildlichen Erfassung des Umgebungsbereichs des Fahrzeugs nachkommen kann. Diese Gefahr ist durch ein zusätzliches Klappenelement vermieden, welches nur dann verschwenkt wird, wenn die Kameraeinheit aus ihrer Ruhestellung in die aktive Stellung bewegt wird.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 eine Seitenansicht eines Kraftfahrzeugs mit einer erfindungsgemäßen Anordnung,
Figur 2 eine Perspektivansicht auf die Anordnung, von der ein Trägergehäuse in einem Durchbruch einer Außenverkleidung des Fahrzeugs angeordnet ist und bei der sich ein Betätigungselement in einer geöffneten Position befindet,
Figur 3 eine perspektivische Einzelteildarstellung der erfindungsgemäßen Anordnung,
Figur 4 eine perspektivische Darstellung einer Kameraeinheit und eines Stützelements der Anordnung aus Figur 3,
Figur 5 eine Perspektivansicht auf die Anordnung, bei der das Betätigungselement in einer Ruheposition und die Kameraeinheit in einer Ruhestellung angeordnet sind,
Figur 6 eine Perspektivansicht auf die Anordnung, bei der das Betätigungselement in einer geöffneten Position und die Kameraeinheit in einer Ruhestellung angeordnet sind,
Figur 7 eine Perspektivansicht auf die Anordnung, bei der das Betätigungselement in einer geöffneten Position und die Kameraeinheit in einer aktiven Stellung angeordnet sind,
Figur 8 die Anordnung aus Figur 5 in einer seitlichen Schnittansicht,
Figur 9 die Anordnung aus Figur 6 in einer seitlichen Schnittansicht,
Figur 10 die Anordnung aus Figur 7 in einer seitlichen Schnittansicht,
Figur 11 eine seitliche Ansicht auf das Betätigungselement, das Stützelement und die Kameraeinheit, wobei das Betätigungselement in seiner Ruheposition und die Kameraeinheit in ihrer Ruhestellung angeordnet sind,
Figur 12 eine weitere seitliche Ansicht auf das Betätigungselement, das Stützelement und die Kameraeinheit, wobei das Betätigungselement in seiner geöffneten Position und die Kameraeinheit in ihrer Ruhestellung angeordnet sind, und
Figur 13 eine weitere seitliche Ansicht auf das Betätigungselement, das Stützelement und die Kameraeinheit, wobei das Betätigungselement in seiner geöffneten Position und die Kameraeinheit in ihrer aktiven Stellung angeordnet sind.

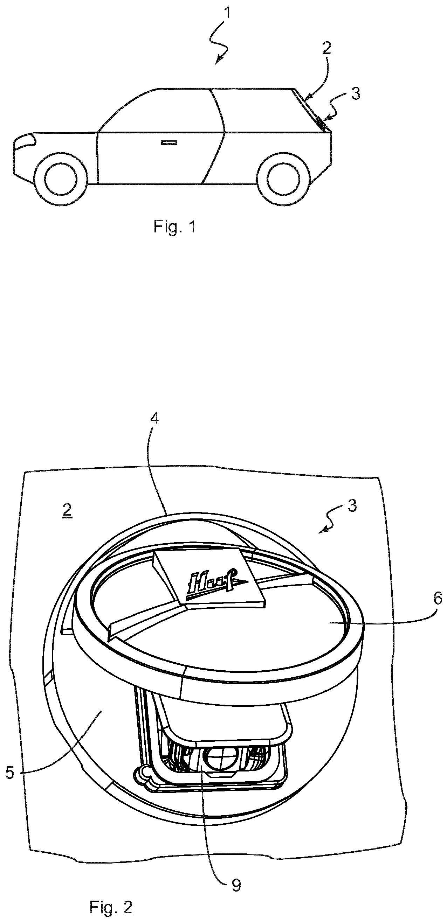

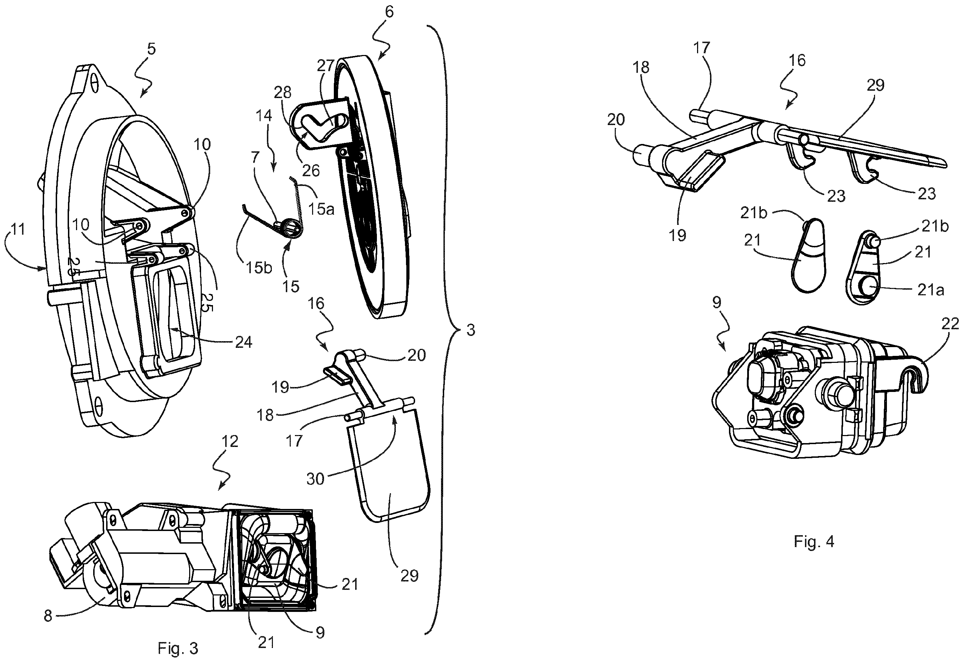

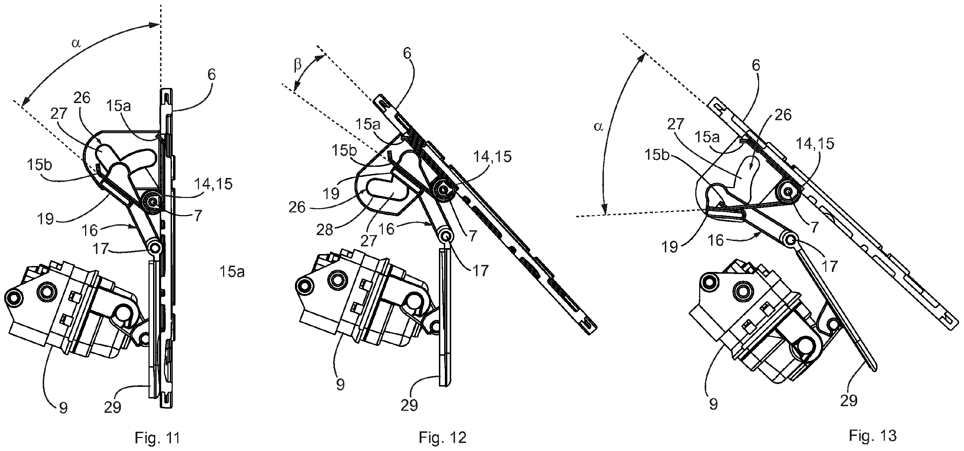

In Figur 1 ist ein Fahrzeug 1 in Form eines PKWs exemplarisch dargestellt, welches in dem Beispiel über eine Klappe bzw. Heckklappe 2 verfügt, an der eine Anordnung 3 gemäß der Erfindung angebracht ist. Die erfindungsgemäße Anordnung 3 besitzt eine Doppelfunktion, nämlich die Erfassung der Fahrzeugumgebung und das Öffnen und/oder Entriegeln der Klappe 2, weshalb die Anordnung alternativ auch als Erfassungsbetätigungsanordnung oder als Kameraeinheit mit integriertem Betätigungselement oder als Betätigungs- oder Griffanordnung mit integrierter Kameraeinheit bezeichnet werden kann. Die Anordnung 3 ist in einem Durchbruch 4 der Außenverkleidung des Fahrzeugs 1 platziert und dort befestigt, wie insbesondere Figur 2 zeigt. In Figur 3 ist eine perspektivische Einzelteildarstellung zu sehen, aus welcher die einzelnen Bauteile der Anordnung 3 ersichtlich sind. Die Anordnung 3 umfasst ein Trägergehäuse 5, an welchem ein Betätigungselement 6 gelagert ist, welches zwischen einer Ruheposition und einer geöffneten Position bewegbar ausgebildet ist. Wie insbesondere aus den Figuren 11, 12 und 13 ersichtlich ist, ist das Betätigungselement 6 um eine an dem Trägergehäuse 5 gelagerte Schwenkachse 7 zwischen der Ruheposition und der geöffneten Position schwenkbar, wobei das Betätigungselement 6 in den Figuren 2, 6, 7, 9, 10, 12 und 13 in der geöffneten Position angeordnet ist. Zur Lagerung der Schwenkachse 7 weist das Trägergehäuse 5 entsprechende Lagerstellen 10 auf, in denen die Schwenkachse 7 drehbar gehalten ist. Das Betätigungselement 6 ist zum Entriegeln und/oder Öffnen der Heckklappe 2 geeignet, worauf nachstehend noch genauer eingegangen wird.

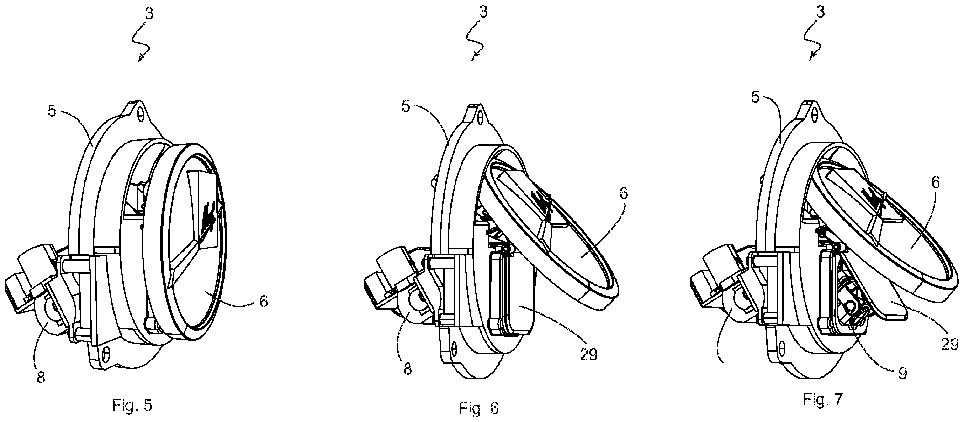

Wie aus Figur 3 ersichtlich ist, umfasst die Anordnung 3 ferner eine an dem Trägergehäuse 5 angebrachte Antriebseinheit 8 und eine bewegbar gelagerten Kameraeinheit 9, die an dem Trägergehäuse 5 aufgenommen und mit der Antriebseinheit 8 gekoppelt ist. Dabei sind die Antriebseinheit 8 und die Kameraeinheit 9 als ein Modul 12 ausgebildet, dass an der Rückseite 11 des Trägergehäuses 5 befestigt ist. Mit Hilfe der Antriebseinheit 8 ist die Kameraeinheit 9 wenigstens zwischen einer Ruhestellung, die in den Figuren 5, 6, 8, 9, 11 und 12 gezeigt ist, und einer aktiven Stellung, die in den Figuren 2, 7, 10 und 13 zu sehen ist, bewegbar. In der Ruhestellung ist die Kameraeinheit 9 zurückgezogen in dem Modul 12 angeordnet. Zur Bewegung in die aktive Stellung bewegt die Antriebseinheit 8 die Kameraeinheit 9 aus dem Modul 12, wodurch die Kameraeinheit 9 ferner durch eine in dem Trägergehäuse 5 ausgebildete Durchgangsöffnung 24 (siehe zum Beispiel Figur 3) bewegt wird, um in der aktiven Stellung einen Umgebungsbereich des Fahrzeugs 1 zu erfassen, was zum Beispiel bei der Rückwärtsfahrt zum Einparken erwünscht ist. Das Betätigungselement 6 deckt in seiner Ruheposition die Kameraeinheit 9 ab, wie zum Beispiel unschwer aus Figur 5 ersichtlich ist.

Die Anordnung 3 umfasst gemäß Figur 3 ferner ein mechanisches Rückstellelement 14, welches dazu dient, das Betätigungselement 6 in seiner Ruheposition (siehe zum Beispiel Figur 5) zu halten, in welcher es die Kameraeinheit 9 bzw. das Modul 12 abdeckt und ein Klappern des Betätigungselements 6 verhindert, oder aber das Betätigungselement 6 zurück in seine Ruheposition zu drängen, wenn das Betätigungselement 6 zum Entriegeln und/oder Öffnen einer Tür oder Klappe 2 des Fahrzeugs 1 von einem Benutzer in die geöffnete Position (siehe zum Beispiel Figur 6) bewegt wird. Das mechanische Rückstellelement 14 ist in dem dargestellten Ausführungsbeispiel als ein elastisches Federelement 15 ausgebildet. Das mechanische Rückstellelement 14 bzw. das elastische Federelement 15 ist mit dem Betätigungselement 6 gekoppelt. Genauer gesagt ist das Federelement 15 eine Schenkelfeder, die auf Biegung beanspruchbar ist. Die Achse des Federelements 15 verläuft um die Schwenkachse 7 des Betätigungselements 6, wobei sich ein erster Schenkel 15a des Federelements 15 an dem Betätigungselement 6 abstützt, wie beispielsweise aus Figur 12 ersichtlich ist. Das mechanische Rückstellelement 14 bzw. das elastische Federelement 15 ist ferner mit einem Stützelement 16 gekoppelt. Genauer gesagt stützt sich der zweite Schenkel 15b des Federelements 15 an dem Stützelement 16 ab, wie ebenso zum Beispiel in Figur 12 gezeigt ist. Wenn die beiden Schenkel 15a und 15b zusammengedrückt bzw. aufeinander zu bewegt werden, wird das Federelement 15 auf Biegung beansprucht, wodurch die von dem Federelement 15 dabei erzeugte Rückstellkraft auf das Betätigungselement 6 wirkt.

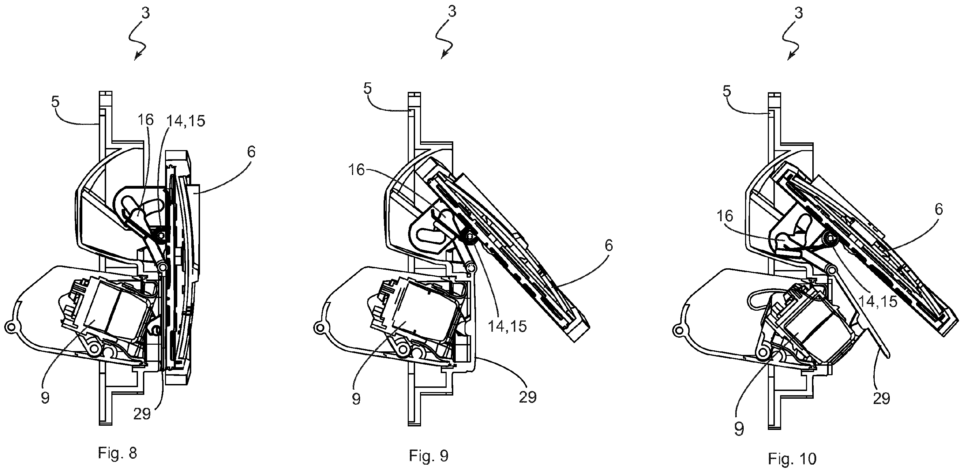

Das Stützelement 16 ist mittels einer an dem Trägergehäuse 5 gelagerten Achse 17 schwenkbar, wobei das Stützelement 16 zwischen einer Grundstellung und einer Betriebsstellung bewegbar bzw. verschwenkbar ausgebildet ist. Zur Lagerung der Achse 17 sind an dem Trägergehäuse 5 weitere Lagerstellen 25 vorgesehen, die unterhalb der Lagerstellen 10 für die Schwenkachse 7 des Betätigungselements 6 angeordnet sind. In der Grundstellung des Stützelements 16 ist die Kameraeinheit 9 in der Ruhestellung angeordnet, was zum Beispiel in den Figuren 8, 9, 11 und 12 gezeigt ist. Was die Figuren 8 und 11 aber auch zeigen ist, dass das Federelement 15 in Grundstellung des Stützelements 16 und in Ruheposition des Betätigungselements 6 entspannt oder nahezu entspannt ist, so dass zwischen den beiden Schenkeln 15a und 15b ein Entspannungswinkel α ausgebildet ist, was besagt, dass das Federelement 15 nicht auf Biegung beansprucht wird oder unter einer Vorspannkraft steht, die ein Klappern des Betätigungselements 6 verhindert. Der Entspannungswinkel α kann einen Winkel zwischen 50° und 60° einnehmen, wodurch ein gewisser Toleranzbereich gegeben ist.

Wie aus den Figuren 8 und 11 ersichtlich ist, übt das mechanische Rückstellelement 14 bzw. das elastische Federelement 15 eine Rückstellkraft auf das Betätigungselement 6 aus, so dass das Betätigungselement 6 in Ruheposition gehalten oder gedrängt wird, wenn die Kameraeinheit 9 in der Ruhestellung und das Stützelement 16 in der Grundstellung angeordnet sind. Hierbei stützt sich das Rückstellelement 14 bzw. der zweite Schenkel 15b des Federelements 15 an dem Stützelement 16 ab. Mit anderen Worten übt in Ruhestellung der Kameraeinheit 9 das mechanische Rückstellelement 14 eine das Betätigungselement 6 in Ruheposition haltende oder drängende Rückstellkraft auf das Betätigungselement 6 aus.

Das Stützelement 16 ist in den Figuren 8, 9, 11 und 12 in seiner Grundstellung angeordnet. Obgleich das Stützelement 16 über die Achse 17 schwenkbar an dem Trägergehäuse 5 gelagert ist, wird das Stützelement 16 von einer Haltekraft in seiner Grundstellung gehalten. Dabei ist die Haltekraft, welche das Stützelement 16 in seiner Grundstellung hält, größer als die Rückstellkraft des elastischen Federelements 15. Dadurch ist gewährleistet, dass in Ruhestellung der Kameraeinheit 9 das Betätigungselement 6 entgegen der vom Rückstellelement 14 aufgebrachten Rückstellkraft in die geöffnete Position bewegbar ist, um die Heckklappe 2 zu entriegeln und/oder zu öffnen, was zum Beispiel in den Figuren 6, 9 und 12 gezeigt ist, bei denen das Betätigungselement 6 in der geöffneten Position angeordnet ist. Wie aus den Figuren 6, 9 und 12 aber auch ersichtlich ist, erfolgt durch die Verschwenkung des Betätigungselements 6 aus der Ruheposition in die geöffnete Position eine derartige Relativbewegung zwischen dem in Grundstellung gehaltenen Stützelement 16 und dem Betätigungselement 6, dass der erste Schenkel 15a des Federelements 15 in Richtung des zweiten Schenkels 15b verlagert ist, so dass zwischen den beiden Schenkeln 15a und 15b ein Kompressionswinkel β (siehe zum Beispiel Figur 12) ausgebildet ist und das elastische Federelement 15 komprimiert ist. Mit anderen Worten ist in Ruhestellung der Kameraeinheit 9 das Stützelement 16 derart in der Grundstellung gehalten, dass das Federelement 15 in geöffneter Position des Betätigungselements 6 infolge einer relativen Verlagerung des Betätigungselements 6 zu dem Stützelement 16 elastisch komprimiert ist.

Die Antriebseinheit 8 ist mit dem Stützelement 16 gekoppelt, so dass das Stützelement 16 relativ zu dem Trägergehäuse 5 bewegbar ist. Dabei sind die Stellungen (Grundstellung oder Betriebsstellung) des Stützelements 16 in dem dargestellten Ausführungsbeispiel an die Stellung der Kameraeinheit 9 gekoppelt. Die Kopplung bzw. Bewegungskopplung von Kameraeinheit 9 und Stützelement 16 ist zum Beispiel bei dem dargestellten Ausführungsbeispiel aus den Figuren 11 und 13 ersichtlich. Zwei Schwenkarme 21 (siehe zum Beispiel Figur 4) sind jeweils mit zwei Kopplungszapfen 21a und 21b versehen, von denen jeweils ein erster Kopplungszapfen 21a in seitlich an der Kameraeinheit 9 angeformte Aufnahmearme 22 drehbar aufgenommen ist, wohingegen der jeweils zweite Kopplungszapfen 21b in entsprechenden Schwenkarmen 23, die an dem Stützelement 16 angeformt sind, drehbar aufgenommen ist. Wenn sich folglich die Kameraeinheit 9 in der Ruhestellung befindet, dann ist das Stützelement 16 in der Grundstellung angeordnet. Wenn sich hingegen die Kameraeinheit 9 in der aktiven Stellung befindet, dann ist das Stützelement 16 in der Betriebsstellung angeordnet. Da jedoch die Bewegung und Stellung der Kameraeinheit 9 an die Antriebseinheit 8 gekoppelt ist, ist folglich das Stützelement 16 über die Antriebseinheit 8 zwischen der Grundstellung und der Betriebsstellung bewegbar ausgebildet.

Auf die einzelnen Bewegungsabläufe sowie die dabei einhergehenden mechanischen Wirkzusammenhänge wird nachstehend noch genauer eingegangen werden. Zuvor werden allerdings weitere konstruktive Details der erfindungsgemäßen Anordnung 3 beschrieben.

Wie den Figuren 3, 4 und 8 bis 12 ferner zu entnehmen ist, weist das Stützelement 16 einen ersten Hebelarm 18 auf. Der erste Hebelarm 18 ist mit einer Anlagefläche 19 und einem Bewegungszapfen 20 ausgebildet. Dabei dient die Anlagefläche 19 des Stützelements 16 dazu, dass sich an ihr der zweite Schenkel 15b des Federelements 15 abstützt, was dann von Bedeutung ist, wenn das Federelement 15 bei Bewegung des Betätigungselements 6 in seine geöffnete Position komprimiert bzw. zusammengedrückt wird, was voraussetzt, dass das Stützelement 16 in der Grundstellung und die Kameraeinheit in der Ruhestellung angeordnet sind. Dieser Vorgang, bei dem das Rückstellelement 14 bzw. das Federelement 15 zusammengedrückt wird, entspricht dem im Stand der Technik beschriebenen Öffnungsvorgang für Türen oder Heckklappen mit Hilfe einer bekannten Anordnung, die aber keine Kameraeinheit aufweist. Bei dieser aus dem Stand der Technik bekannten Anordnung ist die an dem Stützelement 16 ausgebildete Anlagefläche 19 als Teil des Trägergehäuses 5 ausgebildet, so dass sich bekanntlich das Federelement 15 an dem Trägergehäuse 5 abstützt. Eine Relativbewegung eines Stützelements 16 bzw. einer an dem Stützelement 16 ausgebildeten Anlagefläche 19 war bei diesen bekannten Anordnungen nicht vorgesehen.

Dadurch, dass das Stützelement 16 mit seiner Anlagefläche 19 erfindungsgemäß relativ zum Trägergehäuse 5 bewegbar ist, ist es möglich, dass die Antriebseinheit 8 nun nicht mehr gegen die Rückstellkraft des Rückstellelements 14 bzw. Federelements 15 arbeiten muss, weshalb die Antriebseinheit 8 entsprechend energiesparend dimensioniert werden kann. Die Antriebseinheit 8 muss deshalb nicht gegen die Rückstellkraft arbeiten, weil sich bei einer Bewegung der Kameraeinheit 9 aus der Ruhestellung in die aktive Stellung die relative Anordnung von Anlagefläche 19 des ersten Hebelarms 18 zu dem Betätigungselement 6 nicht ändert, wie es zum Beispiel aus einem Vergleich der Figuren 11 und 13 ersichtlich ist. Denn auch bei der Bewegung der Kameraeinheit 9 aus der Ruhestellung in die aktive Stellung bleibt der Entspannungswinkel α erhalten, weil die Anlagefläche 19 des Stützelements 16 nach wie vor die gleiche Relativposition zu dem Betätigungselement 6 einnimmt. Folglich ist das Federelement 15 sowohl während der Bewegung der Kameraeinheit 9 aus der Ruhestellung in die aktive Stellung als auch in der Betriebsstellung des Stützelements 16 und in der geöffneten Position des Betätigungselements 6 entspannt, was durch den Entspannungswinkel α, der wie vorstehend erwähnt zwischen 50° und 60° betragen kann, angezeigt ist (siehe zum Beispiel Figuren 11 und 13).

Bei der Bewegung der Kameraeinheit 9 aus der Ruhestellung in die aktive Stellung wird das Stützelement 16 aus der Grundstellung in die Betriebsstellung bewegt. Bei dieser Bewegung des Stützelements 16 wirkt der Bewegungszapfen 20 mit einer an dem Betätigungselement 6 ausgebildeten Bewegungsbahn 26 zusammen, wie beispielsweise aus den Figuren 10 und 13 ersichtlich ist. Die Bewegungsbahn 26 hat bei einer Bewegung des Betätigungselements 6 in die geöffnete Position keine Bedeutung, wenn das Stützelement 16 in der Grundstellung angeordnet ist. Denn der Bewegungszapfen 20 bewegt sich bei Verschwenkung des Betätigungselements 6 innerhalb einer Ausnehmung 27, ohne aber mit dem Betätigungselement 6 in Wechselwirkung zu treten, was für einen Öffnungs- bzw. Entriegelungsvorgang auch gar nicht erwünscht ist. Form und Größe der Ausnehmung 27 spielen bei einem Öffnungs- bzw. Entriegelungsvorgang keine Rolle, solange der Bewegungszapfen 20 nicht mit dem Betätigungselement 6 bzw. mit dessen Bewegungsbahn 26 zusammenwirkt. Das Federelement 15 bewirkt hierbei lediglich, dass der Bewegungszapfen 20 in die Bewegungsbahn 26 gedrückt wird.

Bedeutung erlangt die Bewegungsbahn 26 erst dann, wenn das Stützelement 16 aus seiner Grundstellung in die Betriebsstellung bewegt wird (siehe Figuren 7, 10 und 13). Denn dann wird die Kameraeinheit 9 ausgefahren und soll den Umgebungsbereich des Fahrzeugs 1 erfassen. Zu diesem Zweck muss aber das Betätigungselement 6 aus der Ruhestellung, in welcher es die Kameraeinheit 9 abdeckt, in die geöffnete Stellung bewegt werden, wozu der Bewegungszapfen 20 des Stützelements 16 bei der Bewegung in die Betriebsstellung in Anlage an eine Endfläche 28 der Bewegungsbahn 26 gelangt und dadurch an dem Betätigungselement 6 zieht. Diese Ziehbewegung führt dazu, dass das Stützelement 16 das Betätigungselement 6 in die geöffnete Position verschwenkt, ohne dass dabei gegen die Rückstellkraft des Rückstellelements 6 gearbeitet werden muss. Es erfolgt vielmehr eine kraftlose Mitnahme des Rückstellelements 6 in dessen geöffnete Position, wenn sich das Stützelement 6 in die Betriebsposition bewegt. Bei dieser Bewegung beträgt der Entspannungswinkel α nach wie vor zwischen 50° und 60°, so dass die Bewegung keine Kompression des elastischen Federelements 15 bewirkt. Mit anderen Worten liegt bei einer Bewegung des Stützelements 16 in die Betriebsstellung der Bewegungszapfen 20 derart an der Endfläche 28 (kann auch nur ein Endpunkt sein) der Bewegungsbahn 26 des Stützelements 16 an, dass der Bewegungszapfen 20 des Stützelements 16 bei einer Bewegung des Stützelements 16 aus der Grundstellung in die Betriebsstellung das Betätigungselement 6 in seine geöffnete Position mit einer Kraft, die kleiner als die Rückstellkraft des Rückstellelements ist, zieht. Dabei steht das Federelement 15 nach wie vor unter einer Vorspannung, um ein Klappern des Betätigungselements 6 zu verhindern.

Wie zum Beispiel die Figuren 3, 6 und 11 bis 13 zeigen, ist ein Klappenelement 29 vorgesehen, um die Kameraeinheit 9 abzudecken, wenn diese in ihrer Ruhestellung angeordnet ist, sich das Betätigungselement 6 jedoch in seiner geöffneten Stellung befindet. In dem dargestellten Ausführungsbeispiel ist an dem Stützelement 16 ein zweiter Hebelarm 30 ausgebildet, welcher das Klappenelement 29 darstellt und die Durchgangsöffnung 24 verschließt, um die Kameraeinheit 9 zu schützen. Somit deckt das Klappenelement 29 in der Grundstellung des Stützelements 16 die Kameraeinheit 9 ab. Hingegen ist das Klappenelement 29 in der Betriebsstellung des Stützelements 16 derart um die Achse 17 verschwenkt angeordnet, dass die Kameraeinheit 9 in die aktive Stellung bewegbar ist, um einen Umgebungsbereich des Fahrzeugs 1 zu erfassen. Der erste Hebelarm 18 und der zweite Hebelarm 30 laufen in der Achse 17 zusammen und sind um diese schwenkbar.

Die Schwenkarme 23 sind an der Rückseite des Klappenelements 29 des Stützelements 16 ausgebildet, so dass bei dem gezeigten Ausführungsbeispiel der zweite Hebelarm 30 über die Kameraeinheit 9 mit der Antriebseinheit 8 bewegungsgekoppelt ist. Alternativ kann selbstverständlich auch eine Kopplung über den ersten Hebelarm 18 erfolgen, wobei die Kopplung direkt mit der Antriebseinheit 8 und nicht über die Kameraeinheit 9 erfolgen kann.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. So wird der Fachmann leicht erkennen, dass in alternativer Ausgestaltung zu dem gezeigten Ausführungsbeispiel die Schwenkachse 7 gleichzeitig auch die das Stützelement 16 lagernde Achse 17 sein kann. Zur Erfindung gehört alles dasjenige, was in der Beschreibung enthalten und/oder in der Zeichnung dargestellt ist.

## Patentansprüche

1. Anordnung (3) für eine Heckklappe (2) eines Fahrzeugs (1), mit
einem Trägergehäuse (5), das in einem Durchbruch (4) einer Außenverkleidung des Fahrzeugs (1) anzuordnen ist,
einer Antriebseinheit (8), die an dem Trägergehäuse (5) angebracht ist,
einer bewegbar gelagerten Kameraeinheit (9), die an dem Trägergehäuse (5) aufgenommen und mit der Antriebseinheit (8) gekoppelt ist, um wenigstens zwischen einer Ruhestellung und einer aktiven Stellung, bei der ein Umgebungsbereich des Fahrzeugs (1) erfassbar ist, bewegt zu werden,
einem an dem Trägergehäuse (5) gelagerten Betätigungselement (6), welches zwischen einer die Kameraeinheit (9) abdeckenden Ruheposition und einer geöffneten Position bewegbar ausgebildet ist und welches zum Entriegeln und/oder Öffnen der Heckklappe (2) geeignet ist,
einem mechanischen Rückstellelement (14), welches mit dem Betätigungselement (6) gekoppelt ist, und
einem Stützelement (16), welches mit dem mechanischen Rückstellelement (14) gekoppelt ist,
wobei in Ruhestellung der Kameraeinheit (9) das mechanische Rückstellelement (14) eine das Betätigungselement (6) in Ruheposition haltende oder drängende Rückstellkraft auf das Betätigungselement (6) ausübt und sich an dem Stützelement (16) abstützt,
**dadurch gekennzeichnet,**
**dass** das Stützelement (16) relativ zum Trägergehäuse (5) bewegbar ist und dass die Antriebseinheit (8) mit dem Stützelement (16) gekoppelt ist.

2. Anordnung (3) nach Anspruch 1, **dadurch gekennzeichnet, dass** in Ruhestellung der Kameraeinheit (9) das Betätigungselement (6) entgegen der vom Rückstellelement (14) aufgebrachten Rückstellkraft in die geöffnete Position bewegbar ist, die zum Entriegeln und/oder Öffnen der Heckklappe (2) geeignet ist.

3. Anordnung (3) nach Anspruch 1 oder 2, **dadurch gekennzeichnet, dass** das Stützelement (16) zwischen einer Grundstellung, in welcher die Kameraeinheit (9) in Ruhestellung angeordnet ist, und einer Betriebsstellung, in welcher die Kameraeinheit (9) in der aktiven Stellung angeordnet ist, bewegbar ausgebildet ist.

4. Anordnung (3) nach Anspruch 3, **dadurch gekennzeichnet, dass** das mechanische Rückstellelement (14) ein elastisches Federelement (15) umfasst.

5. Anordnung (3) nach Anspruch 4, **dadurch gekennzeichnet, dass** in Grundstellung des Stützelements (16) und in Ruheposition des Betätigungselements (6) das Federelement (15) entspannt ist oder unter einer das Betätigungselement (6) in seiner Ruheposition haltenden Vorspannung steht.

6. Anordnung (3) nach Anspruch 4 oder 5, **dadurch gekennzeichnet, dass** in Ruhestellung der Kameraeinheit (9) das Stützelement (16) derart in der Grundstellung gehalten ist, dass das Federelement (15) in geöffneter Position des Betätigungselements (6) infolge einer relativen Verlagerung des Betätigungselements (6) zu dem Stützelement (16) elastisch komprimiert ist.

7. Anordnung (3) nach Anspruch 6, **dadurch gekennzeichnet, dass** das Stützelement (16) schwenkbar an dem Trägergehäuse (5) gelagert ist, wobei das Stützelement (16) von einer Haltekraft, die größer als die Rückstellkraft des elastischen Federelements (15) ist, in der Grundstellung gehalten ist.

8. Anordnung (3) nach einem der Ansprüche 4 bis 7, **dadurch gekennzeichnet, dass** das Stützelement (16) um eine an dem Trägergehäuse (5) gelagerte Achse (17) schwenkbar ist, wobei das Stützelement (16) ferner einen ersten Hebelarm (18) aufweist, an dem eine Anlagefläche (19) für das elastische Federelement (15) und ein mit einer an dem Betätigungselement (6) ausgebildeten Bewegungsbahn (26) zusammenwirkender Bewegungszapfen (20) ausgebildet sind.

9. Anordnung (3) nach Anspruch 8, **dadurch gekennzeichnet, dass** das elastische Federelement (15) den Bewegungszapfen (20) in die Bewegungsbahn (26) drängt.

10. Anordnung (3) nach Anspruch 8 oder 9, **dadurch gekennzeichnet, dass** das Betätigungselement (6) um eine an dem Trägergehäuse (5) gelagerte Schwenkachse (7) zwischen der Ruheposition und der geöffneten Position schwenkbar ist, wobei bei einer Bewegung in die Betriebsstellung der Bewegungszapfen (20) derart an einem Endpunkt oder einer Endfläche (28) der Bewegungsbahn (26) des Stützelements (16) anliegt, dass der Bewegungszapfen (20) des Stützelements (16) bei einer Bewegung des Stützelements (16) aus der Grundstellung in die Betriebsstellung das Betätigungselement (6) in seine geöffnete Position zieht.

11. Anordnung (3) nach Anspruch 8, 9 oder 10, **dadurch gekennzeichnet, dass** die Schwenkachse (7) gleichzeitig auch die das Stützelement (16) lagernde Achse (17) ist.

12. Anordnung (3) nach einem der Ansprüche 8 bis 11, **dadurch gekennzeichnet, dass** sich bei einer Bewegung der Kameraeinheit (9) aus der Ruhestellung in die aktive Stellung die relative Positionierung von Anlagefläche (19) des ersten Hebelarms (18) zu dem Betätigungselement (6) nicht ändert, so dass das Federelement (15) sowohl während der Bewegung der Kameraeinheit (9) aus der Ruhestellung in die aktive Stellung als auch in der Betriebsstellung des Stützelements (16) und in der geöffneten Position des Betätigungselements (6) entspannt ist oder unter einer die relative Positionierung von Anlagefläche (19) zu Betätigungselement (6) haltenden Vorspannung steht.

13. Anordnung (3) nach einem der Ansprüche 8 bis 12, **dadurch gekennzeichnet, dass** der erste Hebelarm (18) des Stützelements (16) oder ein zweiter Hebelarm (30) des Stützelements (16) mit der Antriebseinheit (8) bewegungsgekoppelt ist, wobei das Stützelement (16) vorzugsweise über die Kameraeinheit (9) mit der Antriebseinheit (8) bewegungsgekoppelt ist.

14. Anordnung (3) nach Anspruch 13, **dadurch gekennzeichnet, dass** der zweite Hebelarm (30) als ein Klappenelement (29) ausgebildet ist, welches in der Grundstellung des Stützelements (16) die Kameraeinheit (9) abdeckt und welches in der Betriebsstellung des Stützelements (16) derart um die Achse (17) verschwenkt angeordnet ist, dass die Kameraeinheit (9) in die aktive Stellung bewegbar ist, um einen Umgebungsbereich des Fahrzeugs (1) zu erfassen.

## Claims

1. An arrangement (3) for a tailgate (2) of a vehicle (1), with
a carrier housing (5), which is to be arranged in an aperture (4) of an outer panelling of the vehicle (1),
a drive unit (8), which is attached to the carrier housing (5),
a moveably mounted camera unit (9), which is received on the carrier housing (5) and coupled to the drive unit (8) in order to be moved at least between a rest position and an active position, in which an ambient region of the vehicle (1) is detectable,
an actuation element (6) mounted on the carrier housing (5), which is designed so as to be moveable between a rest position covering the camera unit (9) and an opened position and which is suitable for unlocking and/or opening the tailgate (2),
a mechanical resetting element (14), which is coupled to the actuation element (6), and
a support element (16), which is coupled to the mechanical resetting element (14),
wherein in rest position of the camera unit (9) the mechanical resetting element (14) exerts a resetting force on the actuation element (6) holding or forcing the actuation element (6) in rest position and supports itself on the support element (16),
**characterized in that** the support element (16) is moveable relative to the carrier housing (5) and **in that** the drive unit (8) is coupled to the support element (16).

2. The arrangement (3) according to Claim 1, **characterized in that** in rest position of the camera unit (9) the actuation element (6) is moveable into the opened position against the resetting force exerted by the resetting element (14), which opened position is suitable for unlocking and/or opening the tailgate (2).

3. The arrangement (3) according to Claim 1 or 2, **characterized in that** the support element (16) is designed so as to be moveable between a basic position, in which the camera unit (9) is arranged in rest position, and an operating position, in which the camera unit (9) is arranged in the active position.

4. The arrangement (3) according to Claim 3, **characterized in that** the mechanical resetting element (14) comprises an elastic spring element (15).

5. The arrangement (3) according to Claim 4, **characterized in that** in basic position of the support element (16) and in rest position of the actuation element (6) the spring element (15) is relaxed or subject to a preload which holds the actuation element (6) in its rest position.

6. The arrangement (3) according to Claim 4 or 5, **characterized in that** in rest position of the camera unit (9) the support element (16) is held in the basic position in such a manner that the spring element (15) is elastically compressed in opened position of the actuation element (6) as a consequence of a displacement of the actuation element (6) relative to the support element (16).

7. The arrangement (3) according to Claim 6, **characterized in that** the support element (16) is pivotably mounted on the carrier housing (5), wherein the support element (16) is held in the basic position by a holding force that is greater than the resetting force of the elastic spring element (15).

8. The arrangement (3) according to any one of the Claims 4 to 7, **characterized in that** the support element (16) is pivotable about an axis (17) mounted on the carrier housing (5), wherein the support element (16) furthermore has a first lever arm (18), on which a contact surface (19) for the elastic spring element (15) and a movement pin (20) interacting with a movement path (26) formed on the actuation element (6).

9. The arrangement (3) according to Claim 8, **characterized in that** the elastic spring element (15) forces the movement pin (20) into the movement path (26).

10. The arrangement (3) according to Claim 8 or 9, **characterized in that** the actuation element (6) is pivotable between the rest position and the opened position about a pivot axis (7) mounted on the carrier housing (5), wherein upon a movement into the operating position the movement pin (20) lies against an end point or an end face (28) of the movement path (26) of the support element (16) in such a manner that the movement pin (20) of the support element (16) upon a movement of the support element (16) out of the basic position into the operating position pulls the actuation element (6) into its opened position.

11. The arrangement (3) according to Claim 8, 9 or 10, **characterized in that** the pivot axis (7) is also the axis (17) mounting the support element (16) at the same time.

12. The arrangement (3) according to any one of the Claims 8 to 11, **characterized in that** upon a movement of the camera unit (9) out of the rest position into the active position the positioning of contact face (19) of the first lever arm (18) relative to the actuation element (6) does not change so that the spring element (15) both during the movement of the camera unit (9) out of the rest position into the active position and also in the operating position of the support element (16) and in the opened position of the actuation element (6) is relaxed or subject to a preload holding the positioning of contact face (19) relative to actuation element (6).

13. The arrangement (3) according to any one of the Claims 8 to 12, **characterized in that** the first lever arm (18) of the support element (16) or a second lever arm (30) of the support element (16) is motion-coupled to the drive unit (8), wherein the support element (16) is motion-coupled to the drive unit (8) preferentially via the camera unit (9).

14. The arrangement (3) according to Claim 13, **characterized in that** the second lever arm (30) is designed as a flap element (29), which in the basic position of the support element (16) covers the camera unit (9) and which in the operating position of the support element (16) is arranged pivoted about the axis (17) in such a manner that the camera unit (9) is moveable into the active position in order to detect an ambient region of the vehicle (1).

## Revendications

1. Dispositif (3) pour un hayon (2) d'un véhicule (1), avec
un boîtier de support (5) qui doit être disposé dans une ouverture (4) d'un revêtement extérieur du véhicule (1),
une unité d'entraînement (8) aménagée sur le boîtier de support (5),
une unité de caméra (9) montée de façon mobile, laquelle est réceptionnée au niveau du boîtier de support (5) et est accouplée avec l'unité d'entraînement (8) pour pouvoir être déplacée au moins entre une position de repos et une position active dans laquelle une zone environnante du véhicule (1) est détectable,
un élément d'actionnement (6) monté sur le boîtier de support (5), lequel est réalisé de façon mobile entre une position de repos recouvrant l'unité de caméra (9) et une position ouverte et lequel convient pour déverrouiller et/ou ouvrir le hayon (2),
un élément de rappel mécanique (14), lequel est accouplé avec l'élément d'actionnement (6), et
un élément de support (16), lequel est accouplé avec l'élément de rappel mécanique (14),
dans lequel, dans la position de repos de l'unité de caméra (9), l'élément de rappel mécanique (14) exerce une force de rappel sur l'élément d'actionnement (6) maintenant ou poussant l'élément d'actionnement (6) dans la position de repos et est en appui sur l'élément de support (16),
**caractérisé en ce que**
l'élément de support (16) est mobile par rapport au boîtier de support (5) et que l'unité d'entraînement (8) est accouplée avec l'élément de support (16).

2. Dispositif (3) selon la revendication 1, **caractérisé en ce que**, dans la position de repos de l'unité de caméra (9), l'élément d'actionnement (6) peut être déplacé à l'encontre de la force de rappel fournie par l'élément de rappel (14) dans la position ouverte, laquelle convient pour le déverrouillage et/ou l'ouverture du hayon (2).

3. Dispositif (3) selon la revendication 1 ou 2, **caractérisé en ce que** l'élément de support (16) est réalisé de manière mobile entre une position de base dans laquelle l'unité de caméra (9) est disposée en position de repos et une position de fonctionnement dans laquelle l'unité de caméra (9) est disposée dans la positon active.

4. Dispositif (3) selon la revendication 3, **caractérisé en ce que** l'élément de rappel mécanique (14) comprend un élément de ressort élastique (15).

5. Dispositif (3) selon la revendication 4, **caractérisé en ce que**, dans la position de base de l'élément de support (16) et dans la position de repos de l'élément d'actionnement (6), l'élément de ressort (15) est détendu ou est soumis à une précontrainte maintenant l'élément d'actionnement (6) dans sa position de repos.

6. Dispositif (3) selon la revendication 4 ou 5, **caractérisé en ce que**, dans la position de repos de l'unité de caméra (9), l'élément de support (16) est maintenu dans la position de base de manière à ce que l'élément de ressort (15), en position ouverte de l'élément d'actionnement (6), est comprimé élastiquement suite à un déplacement relatif de l'élément d'actionnement (6) par rapport à l'élément de support (16).

7. Dispositif (3) selon la revendication 6, **caractérisé en ce que** l'élément de support (16) est monté de manière pivotante sur le boîtier de support (5), dans lequel l'élément de support (16) est maintenu dans la position de base par une force de maintien qui est supérieure à la force de rappel de l'élément de ressort élastique (15).

8. Dispositif (3) selon l'une des revendications 4 à 7, **caractérisé en ce que** l'élément de support (16) peut pivoter autour d'un axe (17) monté au niveau du boîtier de support (5), dans lequel l'élément de support (16) présente en outre un premier bras de levier (18) sur lequel une surface d'appui (19) pour l'élément de ressort élastique (15) et un téton de déplacement (20) coopérant avec une voie de déplacement (26) réalisée au niveau de l'élément d'actionnement (6) sont formés.

9. Dispositif (3) selon la revendication 8, **caractérisé en ce que** l'élément de ressort élastique (15) pousse le téton de déplacement (20) dans la voie de déplacement (26).

10. Dispositif (3) selon la revendication 8 ou 9, **caractérisé en ce que** l'élément d'actionnement (6) peut pivoter autour d'un axe de pivotement (7) monté sur le boîtier de support (5) entre la position de repos et la position ouverte, dans lequel, en cas d'un déplacement dans la position de fonctionnement, le téton de déplacement (20) repose contre un point d'extrémité ou une surface d'extrémité (28) de la voie de déplacement (26) de l'élément de support (16) de manière à ce que, lors d'un déplacement de l'élément de support (16) de la position de base vers la position de fonctionnement, le téton de déplacement (20) de l'élément de support (16) tire l'élément d'actionnement (6) dans sa position ouverte.

11. Dispositif (3) selon la revendication 8, 9 ou 10, **caractérisé en ce que** l'axe de pivotement (7) est simultanément également l'axe (17) de montage de l'élément de support (16).

12. Dispositif (3) selon l'une des revendications 8 à 11, **caractérisé en ce que**, lors d'un déplacement de l'unité de caméra (9) de la position de repos vers la position active, le positionnement relatif entre la surface d'appui (19) du premier bras de levier (18) et l'élément d'actionnement (6) ne se modifie pas de sorte que l'élément de ressort (15) est détendu pendant le déplacement de l'unité de caméra (9) de la position de repos vers la position active tout comme également dans la position de fonctionnement de l'élément de support (16) et dans la position ouverte de l'élément d'actionnement (6) ou bien est soumis à une précontrainte maintenant le positionnement relatif entre la surface d'appui (19) et l'élément d'actionnement (6).

13. Dispositif (3) selon l'une des revendications 8 à 12, **caractérisé en ce que** le premier bras de levier (18) de l'élément de support (16) ou un deuxième bras de levier (30) de l'élément de support (16) est en accouplement de déplacement avec l'unité d'entraînement (8), dans lequel l'élément de support (16) est de préférence en accouplement de déplacement avec l'unité d'entraînement (8) via l'unité de caméra (9).

14. Dispositif (3) selon la revendication 13, **caractérisé en ce que** le deuxième bras de levier (30) est réalisé en tant qu'un élément formant clapet (29) lequel, dans la position de base de l'élément de support (16), recouvre l'unité de caméra (9) et lequel, dans la position de fonctionnement de l'élément de support (16), est disposé de façon pivotante autour de l'axe (17) de manière à ce que l'unité de caméra (9) est déplaçable dans la position active pour détecter une zone environnante du véhicule (1).
